# EUROPEAN PATENT SPECIFICATION

(11) **EP 0 656 676 B1**
(45) Date of publication and mention of the grant of the patent: **19.11.1997**
(21) Application number: 94308552.2
(22) Date of filing: 21.11.1994
(51) Int. Cl.: H02G 3/18

(54) **Floor Boxes**
Flurgehäusen
Boîtiers de sol

(30) Priority: 02.12.1993 GB 9324736
(43) Date of publication of application: 07.06.1995
(73) Proprietor: Ackermann Limited, Milton Keynes MK15 8HQ (GB)
(72) Inventor: Harrison, David, Bozeat, Northamptonshire NN29 7NB (GB)
(74) Representative: Nash, Keith Wilfrid

(56) References cited:
- GB-A- 2 236 913
- GB-A- 2 264 731
- NL-A- 8 801 336
- US-A- 4 721 476

## Description

This invention relates to floor boxes, and more especially electrical outlet boxes which provide electrical terminals in an underfloor cabling system and to which flying leads can be connected from above floor telephones, electrical equipment, computers and the like.

### Background to the invention

Mountings for floor boxes basically comprise a box frame for securing the box to the edge of an opening in the floor, and a carpet frame and lid assembly which holds down the edge of the carpet around the floor opening. Both the box frame and the carpet frame and lid assembly require to be secured to the floor and there exist several known arrangements for this purpose. Tn one arrangement, the box frame fixes to the floor and has an internal projecting flange to which an inner edge of the carpet frame beneath the lid secures by fixing screws. In another arrangement, in which the carpet frame and box frame are integrally connected, the box frame carries a member which engages the underside of the floor, and the carpet frame screw fixes to this member to clamp the entire assembly in position. Another recent proposal is to replace the fixing screw of the first-mentioned arrangement by a ratchet mechanism.

In NL-A-8801336 there is disclosed a floor box of a type having a frame unit constituted by an integral or interconnected box frame and a carpet frame and lid assembly, wherein the box frame carries a plurality of retractable fingers which in use engage beneath the floor at the edge of the floor box opening to clamp the frame unit in position. Such a floor box is hereinafter referred to as a floor box of the type described.

It is an object of the invention to provide an improved a floor box of the type described which enables the box to be more easily and quickly mounted in a floor opening.

### Summary of the invention

According to the invention, there is provided a floor box of the type described characterised in that the fingers comprise blades slidable along a wall of the box frame.

The blades are preferably spring urged outwardly of the box frame to engage beneath the floor, and are manually retractable from the extended position.

When a floor box is mounted in position, it is generally necessary for the mounting to be adaptable to different thicknesses of carpet or other floor covering. In the known arrangements, this adaptability is catered for by the fixing screws or the ratchet mechanism, or by adjustability of the clamp member on the box frame.

In accordance with a preferred feature of the present invention, the blades, at the regions thereof which engage under the floor, have a tapered surface, preferably a serrated ramp. The fingers will thus automatically be projected outwardly from the box frame to the extent necessary to ensure a strong clamping action, for substantially all thickness of floor covering. Pressing down on the carpet frame during fitting will enable the fingers to spring out to the maximum possible extent, thereby to ensure that the clamping actions is as strong as possible.

By providing fingers on opposite sides of the box frame adjacent the respective corners thereof, it is possible to employ a single compression spring between each two opposed fingers. Interposition of a spri'ng biassed link mechanism can enable a single spring to be effective on the fingers at all four corners of the box.

Alternatively, in a preferred arrangement each blade is provided with a tension spring which independently biasses the blade outwardly of the box frame.

Regardless of the manner in which the springs act on the fingers, at least two fingers will be incorporated, and preferably four.

Where the floor covering is particularly thin, a separate top blade may be attachable over each main blade, the top blade having a similar tapered surface and being engageable over the main blade so as effectively to raise the level of the ramp.

For the purpose of latching the blades in the retracted position, a pawl and detent device may be provided between the box frame and each blade. Preferably each blade has a partially severed portion bent out to act as the pawl which latches into a detent aperture in the wall of the box frame. A laterally bent out flange on each blade may provide a means of engaging and disengaging the latch.

One arrangement according to the invention has two pairs of opposite blades at the four frame corners, the blades of each pair being biassed outwardly by a single compression spring acting between them. A cover/spring retainer is then preferably provided for each spring pair, extending along the corresponding side wall of the box. Thus, this retainer may be in the form of an elongate element generally of inverted L-section, which detachably clips to the wall of the box. A guide for ensuring travel of the blade close to the box wall may be provided, preferably on the box wall, as well as travel stops on the blades limiting outward projection thereof. The manually engagable flange provided on the blade to enable its retraction is accessible outside the cover/spring retainer.

### Desription of embodiment

A floor box in accordance with the invention is now described, by way of example only, with reference to the accompanying drawings, in which:-
Figure 1 is a diagrammatic cross-sectional view at one side of a floor aperture in which a floor box is received;
Figure 2 is an exploded view of one side of a box frame for the floor box of Figure 1;
Figure 3 is a modification of the side box frame of Figure 2;
Figure 4 is a side view of a main blade in Figure 3 with a top blade attached thereto; and
Figure 5 is an enlarged plan view of the main blade of Figure 4 showing a detail of the attachment.

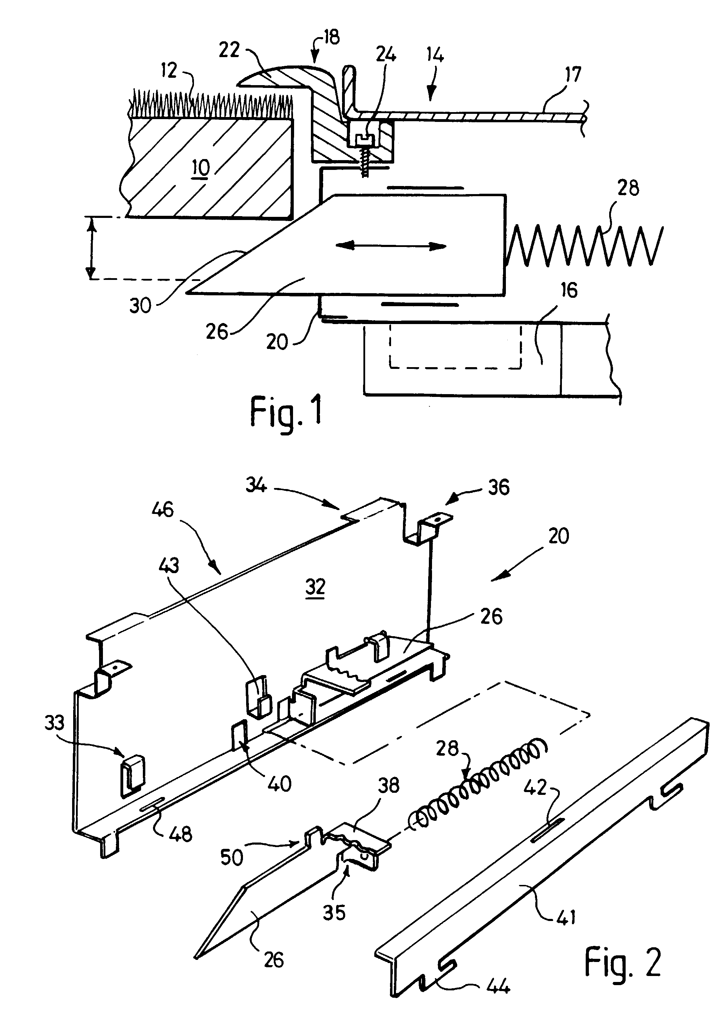

The principle of the arrangement in accordance with the invention will be understood from Figure 1. The floor 10, having a carpet or floor covering 12, is formed with an aperture 14 in which is mounted a floor box 16, typically an electrical outlet box in an underfloor cable system. In use, terminals in the box are accessible through an openable lid 17 in the floor, which lid forms part of a carpet frame and lid assembly 18.

The box 16 is held in place by a metal box frame 20 to which a plastics carpet frame 22 is secured by fixing screws 24 (only one shown).

The entire assembly requires to be mounted firmly in place in the floor aperture. This is achieved by means of two pairs of outwardly urged blades 26, one blade at each corner of the box, each pair being biassed outwards by a compression spring 28. One of the blades 26 is shown in Figure 1, and it will be seen that it has a ramp surface 30 at one end, where the blade engages the underside of the floor when the blade is projected outwardly of the box frame 20 by the spring 28. The assembly is thus fixed in position by the clamping action on the edge of the floor around the aperture 14 by the carpet frame 22 and the blade 26. Different thicknesses of floor covering 12 are automatically catered for and, by pressing down on the carpet frame during fitting, maximum projection of the blade is ensured to achieve a strong clamping action.

Details of the box frame 20 are shown in Figure 2. This basically comprises two end walls (not shown) and two interconnected side walls 32, of which only one is shown in the drawing; the other is a mirror image.

The wall 32 has flanges 34 at the top to prevent the box frame 20 from dropping if the carpet frame 22 is detached, and end flanges 36 to which the carpet frame is normally secured.

Two opposed blades 26 at opposite corners of the box frame 20 are each projected outwardly by the spring 28. The blades 26 effectively slide along the interior of the wall 32, held in place by a guide 33 formed in the wall.

Each blade 26 is formed with bent-out portions serving as a pawl 35 and a retraction flange 38. Pawl 35 can be engaged in detent aperture 40 in the wall 32, thereby to enable the blade 26 to be latched in a non-projection position, ie for use in mounting and demounting the assembly.

A cover/spring retainer 41, in the form of an elongate, inverted L-section element detachably clips to the wall 32 by means of fittings 42, 44 on the cover which respectively engage fittings 43, 48 on the wall. These fittings are such that there is a small clearance between the top limb of the cover and the interior surface of the wall, through which the retraction flange 38 on the blade extends to an accessible position.

A travel stop 50 is provided on the blade 26 to limit its outward projection.

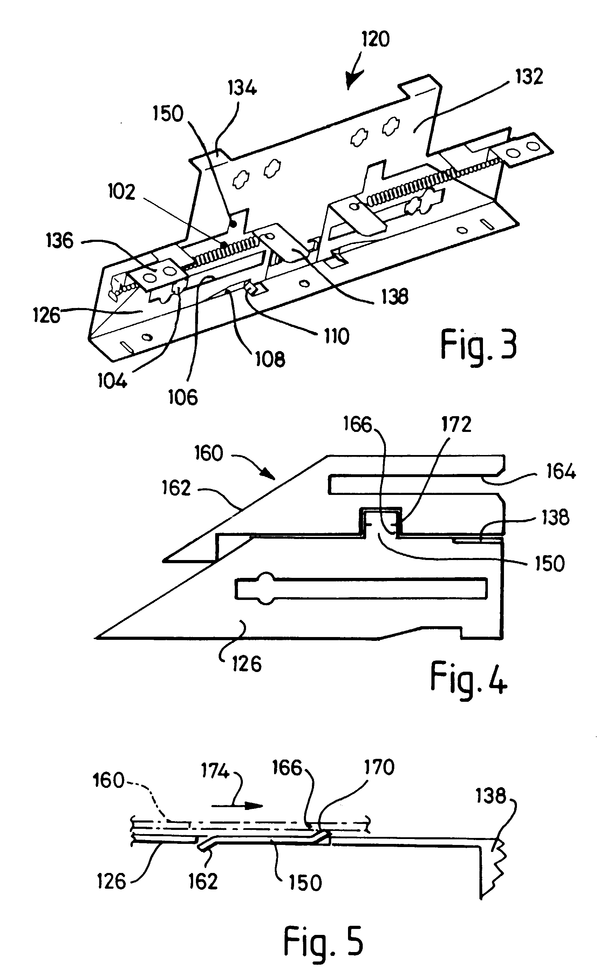

Referring now to the modified box frame 120 of Figure 3, the parts which are similar to those in Figure 2 are shown by the same reference numerial but increased by 100. To avoid duplication of references only the parts to the left of Figure 3 are referenced.

The principal difference over Figure 2 is that the blades 126 of the modified box are biassed outwardly each by its own tension spring 102, which is connected between the respective end flange 136 and the retraction flange 138 of the blade.

Each blade 126 is held slidably in position against the side wall 132 by a fastener 104 which engages in a horizontal guide slot 106 formed in the blade and serves to limit outward movement of the blade. In this case there is no need for a cover/spring retainer, as in Figure 2.

The lower edge of each blade is formed with a cut out 108, and when the blade is in the latched position, each cut out is held by a respective detent 110 bent upwardly from a bottom ledge of the side wall 132.

Although not shown in the drawings, the ramp 30 of each blade 26 or 126, is formed with rounded serrations which enable the blade to provide a more positive grip at the underside of the floor 10.

In situations where the floor 10 is very thin, the blade 126 may not be able to project outwardly sufficiently to locate securely under the floor. Moreover, this problem cannot be overcome by making the angle of the ramp 30 significantly steeper, since the blade will not then be wedged securely enough under the floor 10 to overcome an upward force exerted on the floor box 16.

To overcome this problem, a separate attachment is provided for each main blade 126, in the form of a top blade, 160 as shown in Figures 4 and 5.

The top blade 160 has a serrated ramp 162 similar to that of the main blade 126, and a horizontal slot 164 opening out to the side remote from the ramp. A rectangular cutout 166 is formed under the slot, which in use engages with a corresponding projection 150 formed at the top of the main blade 126.

As best shown in the scrap plan view of Figure 5, the left and right vertical edges (168, 170) of the upper part of the projection 150 are separated from the corresponding edges of the lower part by cuts 172, the left edge 168 being bent or curved inwardly of the plane of drawing, as viewed in Figure 4, while the right edge 170 is outwardly bent or curved.

In use, the top blade 160 is assembled by being pushed in the narrow gap between the main blade 126 and the side wall 132 in the direction of arrow 174 as shown in Figure 5. As soon as the leading, backwardly facing edge of the cutout 166 slides past the right edge 170 of the projection 150, the cutout 166 drops over the projection, as shown in Figure 4, where the top blade is locked in position between the edges 168 and 170.

Upward movement of the top blade is prevented by a guide member (not shown) in the side wall 132 which engages in the slot 164 and guides the top blade during its extension and retraction movements.

Various other modifications are possible within the scope of the invention hereinbefore defined. For example, if the facility of releasing the cover and lid assembly individually is not required, the cover frame and the box frame may be integrally formed. Additionally, the term box frame is intended to be broadly interpreted to include arrangements in which the two opposite side walls are only interconnected by the floor box which is to be mounted in position. Additionally, a linkage system could be incorporated to enable a single spring to act on two three, four or more fingers, which are not essentially required to be in the form of blades, and in this case a suitable element could be provided on the linkage to enable all the fingers to be simultaneously retracted and latched in a retracted position.

## Claims

1. A floor box having a frame unit constituted by an integral or interconnected box frame (20) and a carpet frame and lid assembly (18), wherein the box frame carries a plurality of retractable fingers (26) which in use engage beneath the floor (10) at the edge of the floor box opening to clamp the frame unit in position, characterised in that the fingers comprise blades (26) slidable along a wall (32) of the box frame.

2. A floor box according to claim 1 in which the blades (26) are spring urged outwardly of the box frame to engage beneath the floor, and are manually retractable from the extended position.

3. A floor box according to claim 1 or claim 2 in which the blades, at the regions thereof which engage under the floor, have a tapered surface (30), preferably a serrated ramp (162).

4. A floor box according to any one preceding claim in which four blades (26) are provided, one adjacent each corner of the box frame.

5. A floor box according to any one preceding claim in which each blade (26) is provided with a tension spring (102) which independently biasses the blade outwardly of the box frame (20).

6. A floor box according to any one of claims 3 to 5, in which a separate top blade (160) is attachable over each main blade (126), the top blade having a similar tapered surface and being engageable over the main blade so as effectively to raise the level of the ramp.

7. A floor box according to any one of claims 2 to 6, in which the blades are latchable in the retracted position by a pawl (35) and detent (40) device provided between the box frame and each blade.

8. A floor box according to claim 7 in which each blade has a partially severed portion bent out to act as the pawl (35) which latches into a detent aperture (40) in the wall of the box frame.

9. A floor box according to any one of claims 2 to 8 in which the blades (30) are disposed in two pairs of opposed blades, and a cover (41) is provided for the blades which also acts as a spring retainer, the blade of each pair being biassed outwardly by a single compression spring acting between them.

## Patentansprüche

1. Fußbodenbox mit einer Rahmeneinheit, die aus einem einteiligen oder zusammengesetzten Rahmen (20) und einer aus einem Teppichrahmen und einer Abdeckung bestehenden Anordnung (18) besteht, wobei der Rahmen der Box eine Mehrzahl von zurückziehbaren Fingern (26) aufweist, die im Betrieb unterhalb des Fußbodens (10) am Rand der Öffnung der Box in Eingriff kommen, um die Rahmeneinheit in ihrer Position festzuklemmen, **dadurch gekennzeichnet,** daß die Finger Klingen (26) aufweisen, die längs einer Wand des Rahmens der Box verschiebbar sind.

2. Fußbodenbox nach Anspruch 1, dadurch gekennzeichnet, daß die Klingen (26) nach außen in bezug auf den Rahmen der Box federvorgespannt sind, damit sie unterhalb des Fußbodens in Eingriff kommen, und daß sie von Hand aus der verlängerten Position zurückziehbar sind.

3. Fußbodenbox nach Anspruch 1 oder 2, dadurch gekennzeichnet, daß die Klingen an den Bereichen, die unter dem Boden in Eingriff kommen, eine verjüngte Oberfläche (30), vorzugsweise eine gezähnte Rampe (162), aufweisen.

4. Fußbodenbox nach einem der vorausgehenden Ansprüche, dadurch gekennzeichnet, daß vier Klingen (26) vorgesehen sind, von denen jeweils eine in jeder Ecke des Rahmens der Box angeordnet ist.

5. Fußbodenbox nach einem der vorausgehenden Ansrpüche, dadurch gekennzeichnet, daß jede Klinge (26) mit einer Zugfeder (102) versehen ist, die unabhängig die Klinge nach außen in bezug auf den Rahmen (20) der Box vorspannt.

6. Fußbodenbox nach einem der Ansprüche 3 - 5, dadurch gekennzeichnet, daß eine getrennte obere Klinge (160) über jeder Hauptklinge (126) befestigbar ist, daß die obere Klinge eine ähnliche verjüngte Oberfläche aufweist und über der Hauptklinge so in Eingriff bringbar ist, daß der Pegel der Rampe effektiv angehoben wird.

7. Fußbodenbox nach einem der Ansprüche 2 - 6, dadurch gekennzeichnet, daß die Klingen in der zurückgezogenen Position durch eine Klinke (35) verriegelbar ist, und daß eine Arretiervorrichtung (40) zwischen dem Rahmen der Box und jeder Klinge vorgesehen ist.

8. Fußbodenbox nach Anspruch 7, dadurch gekennzeichnet, daß jede Klinge einen teilweise abgetrannten Teil aufweist, der abgebogen ist und als Klinke (35) wirkt, die eine Verriegelung mit einer Arretieröffnung (40) in der Wand des Rahmens der Box ergibt.

9. Fußbodenbox nach einem der Ansprüche 2 - 8, dadurch gekennzeichnet, daß die Klingen (30) in zwei Paaren von entgegengesetzten Klingen angeordnet sind, und eine Abdeckung (41) für die Klingen vorgesehen ist, die auch als Federbefestigung dient, wobei die Klinge eines jeden Paares nach außen durch eine einzige, zwisch ihnen wirkende Kompressionsfeder vorgespannt ist.

## Revendications

1. Module de plancher comportant un élément encadrant formé d'un encadrage de module intégré ou interconnecté (20) et d'un ensemble cadre avec tige pour moquette (18) dans lequel l'encadrage du module comporte plusieurs doigts rétractables (26) lesquels, pendant usage, s'engagent sous le plancher (10) au bord de l'ouverture du module de plancher, pour serrer l'élément encadrant en position, **caractérisé par le fait que** les doigts comportent des lames (26) pouvant glisser le long de la paroi (32) de l'élément encadrant.

2. Module de plancher selon la revendication 1, dans lequel les lames (26) sont poussées vers l'extérieur de l'encadrage du module au moyen d'un ressort pour s'engager sous le plancher, et sont rétractables manuellement de leur position d'extension.

3. Module de plancher selon la revendication 1 ou 2 dans lequel les lames, dans les zones qui s'engagent sous le plancher, ont une surface effilée (30), préférablement une rampe dentelée (162).

4. Module de plancher selon l'une quelconque des revendications précédentes, dans lequel quatre lames (26) sont prévues, chacune adjacente à un des coins de l'encadrage du module.

5. Module de plancher selon l'une quelconque des revendications précédentes dans lequel chaque iame (26) est pourvue d'un ressort de tension (102) qui pousse la iame en biais vers l'extérieur de l'encadrage du module (20).

6. Module de plancher selon l'une quelconque des revendications 3 à 5, dans lequel une lame supérieure individuelle (160) peut être attachée sur le dessus de chaque lame principale (126), la lame supérieure ayant une même surface effilée et pouvant s'engager sur le dessus de la lame principale de façon à élever effectivement le niveau de la rampe.

7. Module de plancher selon l'une quelconque des revendications 2 à 6, dans lequel les lames peuvent être verrouillées dans la position rétractée par un dispositif à linguet (35) et détente (40) prévu entre l'encadrage du module et chaque lame.

8. Module de plancher selon la revendication 7, dans lequel chaque lame comporte une portion partiellement découpée pliée vers l'extérieur pour servir de linguet (35) s'imbriquant dans une ouverture de la détente (40) dans la paroi de l'encadrage du module.

9. Module de plancher selon l'une quelconque des revendications 2 à 8, dans lequel les lames (30) sont disposées en deux paires de lames opposées, et un recouvrement (41) est prévu pour les lames et sert en même temps de retenue à ressort, la lame de chaque paire étant poussée en biais vers l'extérieur par un seul ressort de compression agissant entre les deux.
